# EUROPEAN PATENT APPLICATION

(11) **EP 4 615 061 A1**
(43) Date of publication of application: **10.09.2025**
(21) Application number: 22963963.8
(22) Date of filing: 03.11.2022
(51) Int. Cl.: H04W 52/02

(54) **WIRELESS COMMUNICATION METHOD, AND TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Novagraaf Technologies
(86) International application number: PCT/CN2022/129657
(87) International publication number: WO 2024/092653

(57) **Abstract**

A wireless communication method, and a terminal device and a network device, which are conductive to ensuring that a terminal device and a network device have a consistent understanding of the state of a main receiver of the terminal device. The method comprises: a terminal device sending first information to a network device, wherein the first information is related to the state of a main receiver of the terminal device when the terminal device enters a low-power-consumption state.

## Description

### TECHNICAL FIELD

Embodiments of the present disclosure relate to the field of communications, and in particular, relate to a wireless communication method, a terminal device, and a network device.

### RELATED ART

In discontinuous reception (DRX) mechanism, a wake-up signal (WUS) is introduced to reduce power consumption of a terminal. A terminal device performs blind detection based on a fixed offset on physical downlink control channel (PDCCH)-based power saving signaling (that is, a PDCCH-WUS). In the case that the terminal device detects the PDCCH-WUS and the WUS indicates that the terminal device is to wake up, the terminal device starts a DRX on duration timer (drx-ondurationTimer); and the terminal device does not start the drx-ondurationTimer in other cases.

Power saving technologies (including a DRX mechanism and a WUS mechanism) in a connected state are designed for a case where a primary receiver of the terminal device is always ON. For further power saving of the terminal device in the connected state, a low power WUS (LP-WUS) is introduced. That is, a receiver with lower power is used. As a state of the primary receiver of the terminal device affects scheduling of a network device, in the case that the terminal device receives the LP-WUS, the state of the primary receiver of the terminal device and how to ensure that the terminal device and the network device have consistent understanding on the state of the primary receiver of the terminal device are also an urgent problem to be solved.

### SUMMARY

Embodiments of the present disclosure provide a wireless communication method, a terminal device, and a network device, which facilitates ensuring consistent understanding on the state of the primary receiver of the terminal device by the terminal device and the network device.

In a first aspect, some embodiments of the present disclosure provide a wireless communication method. The method is applicable to a terminal device, and the method includes: transmitting first information to a network device, wherein the first information is related to a state of a primary receiver of the terminal device in the case that the terminal device enters a low power state.

In a second aspect, some embodiments of the present disclosure provide a wireless communication method. The method is applicable to a network device, and the method includes: receiving first information from a terminal device, wherein the first information is related to a state of a primary receiver of the terminal device in the case that the terminal device enters a low power state; and determining, based on the first information, the state of the primary receiver of the terminal device in the case that the terminal device enters the low power state.

In a third aspect, some embodiments of the present disclosure provide a terminal device. The terminal device is applicable to implementing the method in the first aspect or embodiments thereof.

Specifically, the terminal device includes functional modules for performing the method in the first aspect or embodiments thereof.

In a fourth aspect, some embodiments of the present disclosure provide a network device. The network device is applicable to implementing the method in the second aspect or embodiments thereof.

Specifically, the network device includes functional modules for performing the method in the second aspect or embodiments thereof.

In a fifth aspect, some embodiments of the present disclosure provide a terminal device. The terminal device includes a processor and a memory storing one or more computer programs; wherein the processor is configured to call and run the one or more computer programs in the memory to perform the method in the first aspect or embodiments thereof.

In a sixth aspect, some embodiments of the present disclosure provide a network device. The network device includes a processor and a memory storing one or more computer programs; wherein the processor is configured to call and run the one or more computer programs in the memory to perform the method in the second aspect or embodiments thereof.

In a seventh aspect, some embodiments of the present disclosure provide a chip. The chip is applicable to implementing the method in the first aspect to the second aspect or embodiments thereof.

Specifically, the chip includes a processor, wherein the processor is configured to call and run one or more computer programs in a memory to cause a device equipped with the chip to perform the method in the first aspect to the second aspect or embodiments thereof.

In an eighth aspect of the embodiments of the present disclosure, some embodiments of the present disclosure provide a computer-readable storage medium is provided. The computer-readable storage medium stores one or more computer programs, wherein the one or more computer programs, when loaded and run on a computer, cause the computer to perform the method in the first aspect to the second aspect or embodiments thereof.

In a ninth aspect, a computer program product is provided. The computer program product includes one or more computer program instructions, wherein the one or more computer program instructions, when loaded and executed on a computer, cause the computer to perform the method in the first aspect to the second aspect or embodiments thereof.

In a tenth aspect, some embodiments of the present disclosure provide a computer program. The computer program, when loaded and run on a computer, causes the computer to perform the method in the first aspect to the second aspect or embodiments thereof.

Based on above technical solutions, the terminal device reports to the network device the information related to the state of the primary receiver of the terminal device in the case that the terminal device enters a low power state, and the network device determines the state of the primary receiver of the terminal device based on the information reported by the network device, such that the terminal device and the network device have consistent understanding on the state of the primary receiver of the terminal device. As different sates correspond to different wake-up latencies, the network device may schedule downlink transmission after the wake-up latency corresponding to the state of the primary receiver to avoid resource waste caused by a failure of downlink receipt by the terminal device as the network device schedules downlink transmission during the wake-up duration of the primary receiver.

### BRIEF DESCRIPTION OF DRAWINGS

FIG. 1 is a schematic diagram of an architecture of a communication system according to some embodiments of the present disclosure;
FIG. 2 is a schematic diagram of an operation principle of an LP-WUS receiver of a terminal device according to some embodiments of the present disclosure;
FIG. 3 is a schematic interaction diagram of a wireless communication method according to some embodiments of the present disclosure;
FIG. 4 is a schematic interaction diagram of a wireless communication method according to some embodiments of the present disclosure;
FIG. 5 is a schematic interaction diagram of a wireless communication method according to some embodiments of the present disclosure;
FIG. 6 is a schematic interaction diagram of a wireless communication method according to some embodiments of the present disclosure;
FIG. 7 is a schematic block diagram of a terminal device according to some embodiments of the present disclosure;
FIG. 8 is a schematic block diagram of a network device according to some embodiments of the present disclosure;
FIG. 9 is a schematic block diagram of a communication device according to some embodiments of the present disclosure;
FIG. 10 is a schematic block diagram of a chip according to some embodiments of the present disclosure; and
FIG. 11 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure. It is obvious that the described embodiments are merely part but not all of the embodiments of the present disclosure. All other embodiments derived by persons of ordinary skill in the art without creative efforts based on the embodiments in the present disclosure are within the protection scope of the disclosure.

The technical solutions according to the embodiments of the present disclosure are applicable to various communication systems, such as a global system of mobile communication (GSM), a code-division multiple access (CDMA) system, a wideband code-division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, an universal mobile telecommunication system (UMTS), a wireless local area network (WLAN), a wireless fidelity (Wi-Fi), a 5^{th} generation (5G) communication system, or other communication systems.

In general, communications supported by the traditional communication system are limited and are easy to implement. However, with the development of the communication technologies, the mobile communication system supports traditional communications, and also supports, for example, device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, and a standalone (SA) scenario.

In some embodiments, the communication systems according to the embodiments of the present disclosure are also applicable to an unlicensed spectrum. The unlicensed spectrum is also a shared spectrum. Alternatively, the communication systems according to the embodiments of the present disclosure are also applicable to a licensed spectrum. The licensed spectrum is also a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (ST) in the WLAN, for example, a cellular phone, a cordless phone, a Session Initiation Protocol (SIP) phone, a wireless local loop (WLL) ST, a personal digital assistant (PDA) device, a hand-held device with a wireless communication capability, a computing device or other processing devices connected to a wireless modem, an in-vehicle device, a wearable device, a next generation communication system, such as a terminal device in the NR network, or a terminal device in an evolved public land mobile network (PLMN) network.

In the embodiments of the present disclosure, the terminal device is deployed on land, where the deployment includes indoors or outdoors, or handheld, wearable, or vehicle-mounted deployment; or the terminal device may be deployed on water (for example, on a ship); or the terminal device may be deployed in air (for example, on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, an wireless terminal device in industrial control, a wireless terminal device in self-driving, a wireless terminal device in remote-medical, a wireless terminal in smart grid, a wireless terminal in transportation safety, a wireless terminal in smart city, or a wireless terminal device in smart home.

As examples instead of limitations, in the embodiments of the present disclosure, the terminal device may be a wearable device. The wearable device may also be referred to as a wearable smart device, and is a generic name for wearable devices such as glasses, gloves, watches, clothes, and shoes that are developed by applying wearable technologies for smart designs of daily wear. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a device with full functionality and a large size that is capable of implementing all or part of functions without relying on a smart phone, for example, a smart watch or smart glasses; and includes a device that specializes in specific application functions and needs to be used with another device such as a smart phone, for example, various smart bracelets or smart jewelry for vital sign monitoring.

In the embodiments of the present disclosure, the network device is a device for communicating with the mobile device, and the network device is an access point (AP) in WLAN, a base transceiver station (BTS) in GSM or CDMA, an NodeB (NB) in WCDMA, an evolved NodeB (eNB or eNodeB) in LTE, a relay station or an AP, an in-vehicle device, a wearable device, a network device in an NR network (gNB) or in a future evolutional PLMN network or an NTN network.

As examples instead of limitations, the terminal device has mobility in the embodiments of the present disclosure. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency domain resources, or spectrum resources) used in the cells. The cell is a cell corresponding to the network device (such as the NB), and the cell belongs to a macro NB or a NB corresponding to a small cell. The small cell includes a metro cell, a micro cell, a pico cell, a femto cell, or the like. The small cells have the small coverage and low transmission power, and are suitable for providing high-speed data transmission services.

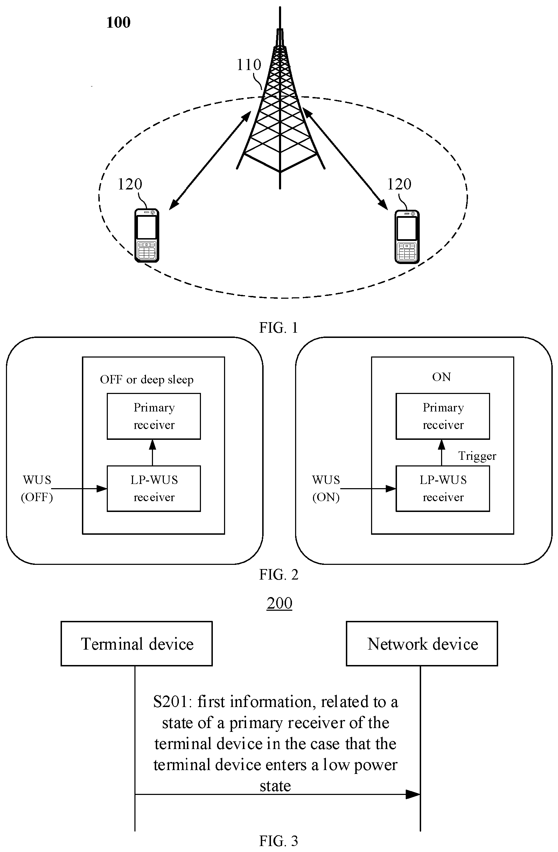

Illustratively, the communication system 100 in the embodiments of the present disclosure is shown in FIG. 1. The communication system 100 includes a network device 110, and the network device 110 is a device that is capable of communicating with a terminal device 120 (also referred to as a communication terminal or a terminal). The network device 110 provides communication coverage to a specific geographical area, and is capable of communicating with the terminal device in the coverage area.

FIG. 1 illustrates one network device and two terminal devices. In some embodiments, the communication system 100 includes a plurality of network devices, and another quantity of terminal devices are included within a coverage range of each of the network devices, which is not limited in the embodiments of the present disclosure.

In some embodiments, the communication system 100 further includes another network entity such as a network controller, a mobile management entity, or the like, which is not limited in the embodiments of the present disclosure.

It should be understood that devices with the communication function in the network/system in the embodiments of the present disclosure are referred to as the communication devices. Using the communication system 100 shown in FIG. 1 as an example, the communication device includes the network device 110 and the terminal device 120 that have the communication function, and the network device 110 and the terminal device 120 are specific devices as described above, which are not repeated herein. The communication device further includes another device in the communication system 100, for example, another network device such as a network controller, a mobile management entity, or the like, which is not limited in the embodiments of the present disclosure.

It should be understood that the terms "system" and "network" herein are interchangeably used in this document. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

In the embodiments of the present disclosure, the term "predefined" is achieved by pre-storing corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the term "protocol" indicates a standard protocol in the field of communications, for example, an LTE protocol, an NR protocol, or a related protocol applied to the future communication system, which is not limited in the present disclosure.

Indication information in the embodiments of the present disclosure is configured over at least one of a system message, physical layer signaling (for example, downlink control information (DCI)), radio resource control (RRC) signaling, or a medium access control (MAC) control element (CE).

With pursuit of rate, latency, high-speed mobility, energy efficiency by persons and diversity and complexity of services in future life, the 3^{rd} generation partnership project (3GPP) international standard organization starts to develop the 5G. The main application scenarios of the 5G include enhance mobile broadband (eMBB), ultra-reliable and low latency communication (URLLC), and massive machine type of communication (mMTC).

It should be understood that in the embodiments of the present disclosure, the NR may be deployed independently, and a new RRC state, that is, an inactive (RRC_INACTIVE) state, is defined in the 5G network for reducing air interface signaling and quickly restoring wireless connections and data services. The state is different from an idle (RRC_IDLE) state and a connected (RRC_CONNECTED) state.

In the RRC_IDLE state, the mobility is cell selection and reselection based on the terminal device, paging is initiated by a core network (CN), and a paging region is configured by the CN. On a base station, no access stratum (AS) context of the terminal device is present and no RRC connection is present.

In the RRC_CONNECTED state, the RRC connection is present, and the AS context of the terminal device is present on the NB and the terminal. The network device knows that a position of the terminal device is at a specific cell level, that is, the network device knows the specific cell where the terminal device is located. The mobility is mobility controlled by the network device, and unicast data is transmitted between the terminal device and the base station.

In the RRC_INACTIVE state, the mobility is cell selection and reselection based on the terminal device, CN-NR connection is present, a base station is present in the AS context of the terminal device, paging is triggered by a radio access network (RAN), a RAN-based paging region is managed by the RAN, and the network device knows that a position of the terminal device is at a RAN-based paging region level, that is the network device knows the specific paging region of the terminal device.

It should be noted that in the embodiments of the present disclosure, the RRC_INACTIVE state is also referred to as a deactivated state, which is not limited in the present disclosure.

In some scenarios, the DRX is introduced for power saving of the terminal device. Specifically, the network device may configure that the terminal device enters a wake-up (DRX ON) state within a time expected by a network and monitors a physical downlink control channel (PDCCH), and the network may also configure that the terminal device enters a sleep (DRX OFF) state within a time expected by the network, that is, the terminal device does not monitor the PDCCH. As such, in the case that the network device tends to transmit data to the terminal device, the network device schedules the terminal device within a duration in which the terminal device enters the DRX ON state, and power consumption of the terminal device decreases as the radio frequency is OFF within a DRX OFF duration.

In some embodiments, the network device configures a DRX function for the terminal device, such that the terminal device discontinuously monitors the PDCCH to save power. For example, each MAC entity corresponds to one DRX configuration. In some embodiments, the DRX configuration includes at least one of:
a DRX on duration timer (drx-onDurationTimer), which is a duration of waking up the terminal device at a start of a DRX cycle;
a DRX slot offset (drx-SlotOffset), which is a latency that the terminal device starts a drx-onDurationTimer;
a DRX inactivity timer (drx-InactivityTimer), which is a duration of monitoring the PDCCH by the terminal device after the terminal device receives a PDCCH indicating uplink initial transmission or downlink initial transmission;
a DRX downlink retransmission timer (drx-RetransmissionTimerDL), which is a maximum duration of monitoring a PDCCH, by the terminal device, indicating scheduling of downlink retransmission. Each downlink hybrid automatic repeat request (HARQ) process, except a broadcast HARQ process, corresponds to a drx-RetransmissionTimerDL;
a DRX uplink retransmission timer (drx-RetransmissionTimerUL), which is a maximum duration of monitoring a PDCCH, by the terminal device, indicating scheduling of uplink retransmission. Each uplink HARQ process corresponds to a drx-RetransmissionTimerUL;
a long DRX cycle start offset (longDRX-CycleStartOffset), which is used for configuring a long DRX cycle and a state subframe offset of a long DRX cycle and a short DRX cycle;
a short DRX cycle (drx-ShortCycle), which is a short DRX cycle and is optional configuration;
a short cycle timer (drx-ShortCycleTimer), which is a duration in which the terminal device is in the short DRX cycle (and not receiving any PDCCH), and is optional configuration;
a round trip time (RTT) timer of an HARQ (drx-HARQ-RTT-TimerDL), which is a minimum pending duration required for the terminal device to expect to receive a PDCCH indicating downlink scheduling. Each downlink HARQ process, except a broadcast HARQ process, corresponds to an HARQ RTT timer; or
an uplink HARQ RTT timer (drx-HARQ-RTT-TimerUL), which is a minimum pending duration required for the terminal device to expect to receive a PDCCH indicating uplink scheduling. Each uplink HARQ process corresponds to a drx-HARQ-RTT-TimerUL.

In the case that the DRX is configured for the terminal device, the terminal device needs to monitor the PDCCH in a DRX active time. The DRX active time includes the following cases.

Any one of the drx-onDurationTimer, the drx-InactivityTimer, the drx-RetransmissionTimerDL, the drx-RetransmissionTimerUL, and a random access contention resolution timer (ra-ContentionResolutionTimer) operates.

The terminal device transmits a scheduling request (SR) on a PUCCH and enters a pending state.

In the contention-based random access process, the terminal device does not receive an initial transmission indicated by the PDCCH and scrambled by a cell radio network temporary identifier (RNTI) (C-RNTI) after successfully receiving a random access response.

In some embodiments, the terminal device determines a time for starting the drx-onDurationTimer based on whether the terminal device uses the long DRX cycle or the short DRX cycle. For example: in the case that the terminal device uses the short DRX cycle, and a current subframe meets [(SFN x 10) + a subframe number] modulo (drx-ShortCycle) = (drx-StartOffset) modulo (drx-ShortCycle); and in the case that the terminal device uses the long DRX cycle, and a current subframe meets [(SFN x 10) + a subframe number] modulo (drx-LongCycle) = drx-StartOffset.
modulo represents the modular operation.

In some embodiments, the terminal device starts the drx-onDurationTimer at a time after drx-SlotOffset slots at a start of a current subframe.

In some embodiments, the condition of starting or restarting the drx-InactivityTimer includes, but is not limited to the case that the terminal device starts or restarts the drx-InactivityTimer in the case that the terminal device receives a PDCCH indicating downlink initial transmission or uplink initial transmission.

In some embodiments, the condition of starting or restarting the drx-RetransmissionTimerDL includes, but is not limited to the case that the terminal device terminates the drx-RetransmissionTimerDL corresponding to an HARQ process in the case that the terminal device receives a PDCCH indicating downlink transmission or the terminal device receives a MAC protocol data unit (PDU) on a configured downlink grant resource; and the terminal device starts the drx-RetransmissionTimerDL corresponding to an HARQ process in the case that drx-HARQ-RTT-TimerDL corresponding to the HARQ process of the terminal device expires and downlink data transmitted in the HARQ process fails to be decoded.

In some embodiments, the condition of starting and terminating the drx-RetransmissionTimerUL by the terminal device include, but are not limited to: the case that terminal device terminates the drx-RetransmissionTimerDL corresponding to an HARQ process in the case that the terminal device receives a PDCCH indicating uplink transmission or the terminal device transmits a MAC PDU on a configured uplink grant resource. The terminal device starts the drx-HARQ-RTT-TimerUL corresponding to an HARQ process in the case that the terminal device finishes a first repetition transmission of a PUSCH; and the case that the terminal device starts the drx-RetransmissionTimerUL corresponding to an HARQ process in the case that the drx-HARQ-RTT-TimerUL corresponding to the HARQ process of the terminal device expires.

In some embodiments, the terminal device uses the long DRX cycle by default, and the short DRX cycle is optional configuration. For a terminal device configured with the short DRX cycle, the terminal device converts between the short DRX cycle and the long DRX cycle in a specific manner.

For example, in the case that the drx-InactivityTimer expires and/or the terminal device receives a DRX command MAC CE, the terminal device uses the long DRX cycle.

For example, in the case that the drx-ShortCycleTimer expires and/or the terminal device receives a long DRX command MAC CE, the terminal device uses the short DRX cycle.

In the NR system, power saving signaling is introduced to reduce the power consumption of the terminal. The terminal device performs blind detection based on a fixed offset on PDCCH-based power saving signaling (that is, the PDCCH-WUS). In the case that the terminal device detects the PDCCH-WUS and the WUS indicates that the terminal device is to wake up, the terminal device starts the drx-ondurationTimer; and the terminal device does not start the drx-ondurationTimer in other cases.

For the terminal device in the connected state, the power saving technologies (including the DRX mechanism and the WUS mechanism) are designed for a case where the primary receiver of the terminal is always ON. For further power saving of the terminal device in the connected state, an LP-WUS is considered. FIG. 2 is a schematic diagram of an operation principle of an LP-WUS. The terminal device includes a primary receiver (or referred to as a main radio frequency) and an LP-WLTS receiver. Power consumption of the LP-WUS receiver is less than power consumption of the primary receiver, the primary receiver is OFF or in a sleep state before the terminal device receives the LP-WLTS (that is, entering a low power receiving state), and the terminal device starts the primary receiver to monitor a downlink signal after receiving the LP- WUS, such that the power saving is achieved.

After the terminal device enters the low power receiving state, the primary receiver of the terminal device may be in different sleep states, for example, a deep sleep state, a light sleep state, a micro sleep state, an OFF state, and the like. For different sleep states, wake-up times of the primary receiver are different. Thus, different sleep states affect scheduling of the network device, and thus how to ensure that the terminal device and the network device have consistent understanding on the state of the primary receiver is an urgent problem to be solved.

For convenient understanding on the technical solutions according to the embodiments of the present disclosure, the technical solutions according to the present disclosure are described in detail hereinafter through specific embodiments. As optional solutions, the above related technologies may be arbitrarily combined with the technical solutions according to the embodiments of the present disclosure, which are within the scope of protection of the embodiments of the present disclosure. The embodiments of the present disclosure include at least some of the following content.

FIG. 3 is a schematic interaction diagram of a wireless communication method 200 according to some embodiments of the present disclosure. As shown in FIG. 3, the method 200 includes the following processes.

In S210, a terminal device transmits first information to a network device, wherein the first information is related to a state of a primary receiver of the terminal device in the case that the terminal device enters a low power state.

In some embodiments, the terminal device enters an RRC connected (RRC_CONNECTED) state.

In some embodiments, the terminal device includes the primary receiver and a low power receiver (or referred to as an LP-WLTS receiver). Power consumption of the low power receiver is less than power consumption of the primary receiver.

In some embodiments, the terminal device entering the low power state (or referred to as a low power receiving state) means that: the low power receiver of the terminal device enters a receiving state (that is, ON, or an operating state), and/or the primary receiver of the terminal device exits an operating state (that is, the receiving state).

In some embodiments, the state of the primary receiver of the terminal device refers to a mode of the primary receiver. Alternatively, the state of the primary receiver corresponds to the mode of the primary receiver. That is, the state of the primary receiver and the mode of the primary receiver are interchanged by each other, or, the state of the primary receiver is in correspondence with the mode of the primary receiver.

In some embodiments, the state of the primary receiver refers to a receiving state of the primary receiver, a sleep state of the primary receiver, a mode of the primary receiver, or a sleep mode of the primary receiver. The state of the primary receiver represents a sleep degree of the primary receiver, a degree of exiting the operating state, or a degree of performing downlink receipt.

In some embodiments, different states of the primary receiver correspond to different wake-up latencies or powers. A wake-up latency corresponding to a state is a latency required for the primary receiver waked up from the state and ready to receive a downlink signal. In some embodiments, the downlink signal includes, but is not limited to, at least one of a PDCCH, a physical downlink shared channel (PDSCH), a master information block (MIB), a paging message, a synchronization signal block (SSB), or a channel state information reference signal (CSI-RS).

In some embodiments, a duration from the primary receiver of the terminal device being waked up to being ready to receive the downlink signal is also referred as a wake-up duration. In the case that the primary receiver is in the wake-up duration, the primary receiver is unable to performing downlink receipt. Thus, resource waste is caused in the case that the network device performs the downlink receipt in the wake-up duration.

In some embodiments, the primary receiver of the terminal device has various states, and the present disclosure does not limit a number of states of the primary receiver. Illustratively, the state of the primary receiver of the terminal device includes, but is not limited to, at least one of: a first state, a second state, a third state, or a fourth state; wherein power consumption in the case that the primary receiver is in the first state, the second state, the third state, and the fourth state successively decreases; and/or a wake-up latency corresponding to the first state, a wake-up latency corresponding to the second state, a wake-up latency corresponding to the third state, and a wake-up latency corresponding to the fourth state successively increase.

In some embodiments, the first state is a micro sleep state, the second state is a light sleep state, the third state is a deep sleep state, and the fourth state is OFF.

In some embodiments, the micro sleep state is a micro sleep mode. Alternatively, the micro sleep state corresponds to the micro sleep mode.

In some embodiments, the light sleep state is a light sleep mode. Alternatively, the light sleep state corresponds to the light sleep mode.

In some embodiments, the deep sleep state is a deep sleep mode. Alternatively, the deep sleep state corresponds to the deep sleep mode.

In some embodiments, the OFF state is an OFF mode. Alternatively, the OFF state corresponds to the OFF mode.

It should be understood that above states of the primary receiver are only illustrative. In some embodiments, the primary receiver has more states or less states, which is not limited in the present disclosure.

In some embodiments, the primary receiver has N states. The N states are a complete set of the states of the primary receiver, and are predefined or divided according to rules. The network device and the terminal device have consistent understanding on the N states. A terminal device may support all N states or only some of the N states. For different terminal devices, the supported states are the same or different.

In some embodiments, the first information is transmitted in the case that the network device supports transmission of the WUS and/or the network device supports the terminal device in reporting information related to the state of the primary receiver.

For example, the first information is transmitted upon receipt of third configuration information from the network device. The third configuration information indicates that the network device supports transmission of the WUS and/or the network device supports the terminal device in reporting information related to the state of the primary receiver.

In some embodiments, the third configuration information is transmitted over at least one of: a system message, RRC signaling (for example, an RRC reconfiguration message), a MAC CE, or a PDCCH.

In some embodiments, the system message includes a system information block (SIB), for example, a master information block (MIB), a SIB 1, a SIB 2, or other SIBs.

Specific implementations of wireless communications according to the embodiments of the present disclosure are described in conjunction with detailed embodiments hereinafter.

First embodiments: the first information includes first capability information. The first capability information includes capability information related to a state of the primary receiver supported by the terminal device.

In some embodiments, the first capability information is transmitted over uplink signaling, for example, including but not limited to uplink RRC signaling, an uplink MAC CE, and uplink control information.

In some embodiments, the first capability information is carried in terminal capability information (UECapabilityInformation) and reported to the network device. That is, the terminal device reports information related to the supported state of the primary receiver to the network device as a capability.

In some embodiments, the first capability information explicitly or implicitly indicates the state of the primary receiver supported by the terminal device. For example, the first capability information indicates information related to the state of the primary receiver supported by the terminal device, for example, a switching latency, and the like.

In some specific embodiments, the first capability information includes at least one of: one or more states of the primary receiver supported by the terminal device in the case that the terminal device enters the low power state; or one or more wake-up latencies supported by the terminal device in the case that the terminal device enters the low power state, wherein the one or more wake-up latencies correspond to the one or more states of the primary receiver supported by the terminal device.

In some embodiments, the primary receiver supported by the terminal device has one or more states, for example, including but not limited to at least one of a first state, a second state, a third state, or a fourth state. For the description of the first state, the second state, the third state, or the fourth state, reference may be made to above embodiments, which is not repeated for brevity.

In some embodiments of the present disclosure, the method 200 further includes: receiving, by the terminal device, first signaling from the network device, wherein the first signaling is used for configuring a target state of the primary receiver of the terminal device and/or a wake-up latency corresponding to the target state.

In some embodiments, the target state or the wake-up latency corresponding to the target state is determined based on the first capability information.

For example, in the case that the terminal device supports the first state, the first signaling is used for configuring the state of the primary receiver as the first state.

For example, in the case that the terminal device supports the first state and the second state, the first signaling is used for configuring the state of the primary receiver as the first state or the second state.

In some embodiments, the first signaling includes at least one of: RRC signaling (for example, an RRC reconfiguration message), a MAC CE, or a PDCCH.

In some embodiments, the first signaling further indicates that the terminal device enters the low power state.

That is, in the case that the network device instructs the terminal device to enter the low power state, the network device further indicates a state of the primary receiver of the terminal device when the terminal device enters the low power state.

It should be understood that the network device instructs the terminal device to enter the low power state and indicates the state of the primary receiver of the terminal device when the terminal device enters the low power state over one signaling, or over two pieces of signaling respectively.

In some embodiments, the method 200 further includes: entering, by the primary receiver of the terminal device, the target state configured by the network device or the target state configured using the network device in the case that the terminal device enters the low power state.

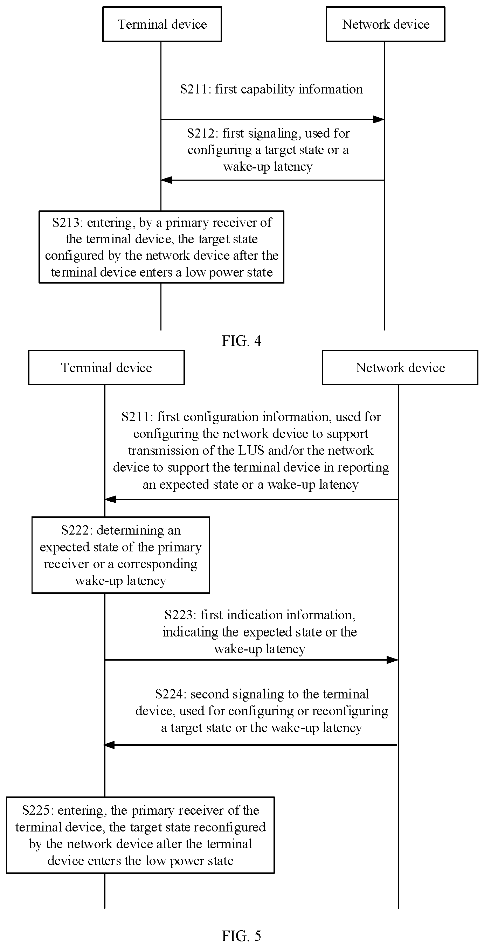

In conjunction with FIG. 4, the implementation process of the first embodiments is described. As shown in FIG. 4, the method includes the following processes.

In S211, a terminal device reports first capability information to a network device.

In some embodiments, the first capability information is transmitted in the case that the network device supports transmission of the WUS and/or the network device supports the terminal device in reporting information related to the supported state of the primary receiver.

In S212, the network device transmits first signaling to the terminal device, wherein the first signaling is used for configuring a target state of the primary receiver of the terminal device and/or a wake-up latency corresponding to the target state.

In some embodiments, the target state is determined based on the first capability information.

In S213, a primary receiver of the terminal device enters the target state configured by the network device after the terminal device enters a low power state.

Thus, in the first embodiments, the network device configures the target state of the primary receiver to the terminal device based on the first capability information reported by the terminal device. Furthermore, in entering the low power state, the primary receiver of the terminal device enters the target state configured by the network device, such that the terminal device and the network device have consistent understanding on the state of the primary receiver. As different states correspond to different wake-up latencies, the network device schedules downlink transmission after the wake-up latency corresponding to the state of the primary receiver to avoid resource waste caused by a failure of downlink receipt by the terminal device as the network device schedules the downlink transmission during the wake-up duration of the primary receiver.

Second embodiments: The first information includes first indication information. The first indication information indicates information related to a state of the primary receiver expected (tended to, or interested) by the terminal device in the case that the terminal device enters the low power state.

In some embodiments, the first indication information explicitly or implicitly indicates the state of the primary receiver expected by the terminal device. For example, the first indication information indicates information related to the state of the primary receiver expected by the terminal device, for example, a switching latency, and the like.

In some specific embodiments, the first indication information indicates at least one of:

one or more states of the primary receiver expected by the terminal device in the case that the terminal device enters the low power state; or

one or more wake-up latencies expected by the terminal device in the case that the terminal device enters the low power state, wherein the one or more wake-up latencies correspond to the one or more states of the primary receiver expected by the terminal device.

In some embodiments, the primary receiver expected by the terminal device has at least one of the following states: a first state, a second state, a third state, or a fourth state. For the description of the first state, the second state, the third state, or the fourth state, reference may be made to above embodiments, which is not repeated for brevity.

In some embodiments, the first indication information is transmitted over at least one of: RRC signaling, a MAC CE, or a PUCCH. In some embodiments, the RRC signaling includes, but is not limited to terminal assistance information (UEAssistanceInformation).

In some embodiments, the terminal device determines the expected state of the primary receiver based on its state and/or information of a to-be-transmitted service.

In some embodiments, its state includes, but is not limited to, a remaining battery capacity of the terminal device.

In some embodiments, the information of the to-be-transmitted service includes a type of the to-be-transmitted service and a requirement of time field.

For example, in the case that the remaining battery capacity of the terminal device is less than a first threshold, the expected state of the primary receiver is determined as a state with low power consumption, for example, the third state, the fourth state, and the like.

For example, in the case that a latency requirement of the to-be-transmitted service is strict, the expected state of the primary receiver is determined as a state with a low wake-up latency, for example, the first state, the second state, and the like.

In some embodiments, the terminal device transmits the first indication information to the network device in the case that a state of the primary receiver currently expected by the terminal device is different from a state of the primary receiver previously (that is, latest) reported and expected by the terminal device. The first indication information indicates the state of the primary receiver currently expected by the terminal device. That is, in the case that the state currently expected by the terminal device is different from the state previously expected by the terminal device, the terminal device changes the expected state of the primary receiver by transmitting the first indication information, such that the network device configures the expected state of the primary receiver to the terminal device, and the terminal device and the network device are ensured to have consistent understanding on the state of the primary receiver.

In some embodiments, the terminal device transmits the first indication information to the network device in the case that a state of the primary receiver currently expected by the terminal device is different from a state (for example, a latest state of the primary receiver configured by the network device to the terminal device) of the primary receiver configured by the network device to the terminal device. The first indication information indicates the state of the primary receiver currently expected by the terminal device. That is, in the case that the state currently expected by the terminal device is different from the state configured by the network device to the terminal device, the terminal device indicates the state of the primary receiver expected by the terminal device by transmitting the first indication information, such that the network device configures the expected state of the primary receiver to the terminal device, and the terminal device and the network device are ensured to have consistent understanding on the state of the primary receiver.

In some embodiments, the first indication information is transmitted in the case that the network device supports transmission of the WUS and/or the network device supports the terminal device in reporting the information related to the expected state of the primary receiver.

For example, the first indication information is transmitted upon receipt of first configuration information from the network device. The first configuration information indicates that the network device supports transmission of the WUS and/or the network device supports the terminal device in reporting the information related to the expected state of the primary receiver.

In some embodiments, the first configuration information is transmitted over at least one of: a system message, RRC signaling (for example, an RRC reconfiguration message), a MAC CE, or a PDCCH.

In some embodiments, the system message includes a SIB, for example, a MIB, a SIB 1, a SIB 2, or other SIBs.

In some embodiments, the method 200 further includes: receiving, by the terminal device, second signaling from the network device, wherein the second signaling is used for configuring or reconfiguring a target state of the primary receiver of the terminal device and/or a wake-up latency corresponding to the target state. In some embodiments, the target state or the wake-up latency corresponding to the target state is determined based on the state of the primary receiver expected by the terminal device.

For example, after the network device configures the target state of the primary receiver to the terminal device over the first signaling, the terminal device transmits the first indication information to the network device to indicate the state of the primary receiver currently expected by the terminal device. In the case that the state of the primary receiver expected by the terminal device is different from the state of the primary receiver configured over the first signaling, the network device transmits the second signaling to the terminal device based on the state of the primary receiver expected by the terminal device to reconfigure the target state of the primary receiver of the terminal device.

For example, the terminal device determines the expected state of the primary receiver based on its state or the information of the to-be-transmitted service and then transmits the first indication information to the network device, and the network device transmits the second signaling to the terminal device based on the state of the primary receiver expected by the terminal device to configure the target state of the primary receiver of the terminal device.

In conjunction with FIG. 5, the implementation process of the second embodiments is described. As shown in FIG. 5, the method includes the following processes.

In S222, a terminal device determines an expected state of the primary receiver or a wake-up latency corresponding to the state.

In some embodiments, the terminal device determines the expected state of the primary receiver or the wake-up latency corresponding to the state based on its state or the information of the to-be-transmitted service.

In S223, the terminal device transmits first indication information to the network device to indicate the state of the primary receiver expected by the terminal device.

In some embodiments, the first indication information is transmitted in the case that the network device supports transmission of the WUS and/or the network device supports the terminal device in reporting the information related to the expected state of the primary receiver.

For example, before S223, the method further includes S222. That is, the network device transmits the first configuration information to the terminal device. The first configuration information is used for configuring the network device to support transmission of the WUS and/or the network device to support the terminal device in reporting the information related to the expected state of the primary receiver.

In S234, the network device transmits second signaling to the terminal device, wherein the second signaling is used for configuring or reconfiguring a target state of the primary receiver of the terminal device and/or a wake-up latency corresponding to the target state.

In some embodiments, the target state is determined based on the state of the primary receiver expected by the terminal device and indicated by the first indication information.

In S225, the primary receiver of the terminal device enters the target state configured or reconfigured by the network device after the terminal device enters the low power state.

Thus, in the second embodiments, the network device configures or reconfigures the target state of the primary receiver to the terminal device based on the first indication information transmitted by the terminal device. Furthermore, in entering the low power state, the terminal device enters the target state configured or reconfigured by the network device, such that the terminal device and the network device have consistent understanding on the state of the primary receiver. As different states correspond to different wake-up latencies, the network device schedules downlink transmission after the wake-up latency corresponding to the state of the primary receiver to avoid resource waste caused by a failure of downlink receipt by the terminal device as the network device schedules the downlink transmission during the wake-up duration of the primary receiver.

Third embodiments: the first information includes second indication information. The second indication information indicates information related to a state of the primary receiver which the terminal device determines to use (decides to use, or is to use) or currently uses in the case that the terminal device enters the low power state.

In some embodiments, the second indication information explicitly or implicitly indicates the state of the primary receiver which the terminal device determines to use or currently uses. For example, the second indication information indicates information related to the state of the primary receiver which the terminal device determines to use or currently uses, for example, a switching latency, and the like.

In some embodiments, the second indication information indicates at least one of: the state of the primary receiver which the terminal device determines to use or currently uses in the case that the terminal device enters the low power state; or one or more wake-up latencies, wherein the one or more wake-up latencies correspond to one or more states of the primary receiver which the terminal device determines to use or currently uses.

In some embodiments, the state of the primary receiver which the terminal device determines to use or currently uses includes at least one of: a first state, a second state, a third state, or a fourth state. For the description of the first state, the second state, the third state, or the fourth state, reference may be made to above embodiments, which is not repeated for brevity.

In some embodiments, the second indication information is transmitted over at least one of: RRC signaling, a MAC CE, or a PUCCH.

In some embodiments, the RRC signaling includes, but is not limited to, at least one of: a UEAssistanceInformation message, an RRC connection establishment message, an RRC reestablishment message, an RRC recovery message, or an RRC reconfiguration message.

In some embodiments, the terminal device determines the state of the primary receiver which the terminal device determines to use or currently uses based on its state and/or information of the to-be-transmitted service.

In some embodiments, its state includes, but is not limited to, a remaining battery capacity of the terminal device.

In some embodiments, the information of the to-be-transmitted service includes a type of the to-be-transmitted service and a requirement of time field.

For example, in the case that the remaining battery capacity of the terminal device is less than the first threshold, the state of the primary receiver that the terminal device determines to use is a state with low power consumption, for example, the third state, the fourth state, and the like.

For example, in the case that a latency requirement of the to-be-transmitted service is strict, the state of the primary receiver that the terminal device determines to use is a state with a low wake-up latency, for example, the first state, the second state, and the like.

In some embodiments, the second indication information is transmitted in the case that the network device supports transmission of the WUS and/or the network device supports the terminal device in reporting the information related to the state of the primary receiver which the terminal device determines to use or currently uses.

For example, the second indication information is transmitted upon receipt of second configuration information from the network device. The second configuration information indicates that the network device supports transmission of the WUS and/or the network device supports the terminal device in reporting the information related to the state of the primary receiver which the terminal device determines to use or currently uses.

In some embodiments, the terminal device transmits the second indication information to the network device in the case that the state of the primary receiver which the terminal device determines to use or currently uses is different from a state of the primary receiver previously reported by the terminal device to the network device.

In some embodiments, the second configuration information is transmitted over at least one of a system message, RRC signaling, a MAC CE, or a PDCCH.

In some embodiments, the system message includes a SIB, for example, a MIB, a SIB 1, a SIB 2, or other SIBs.

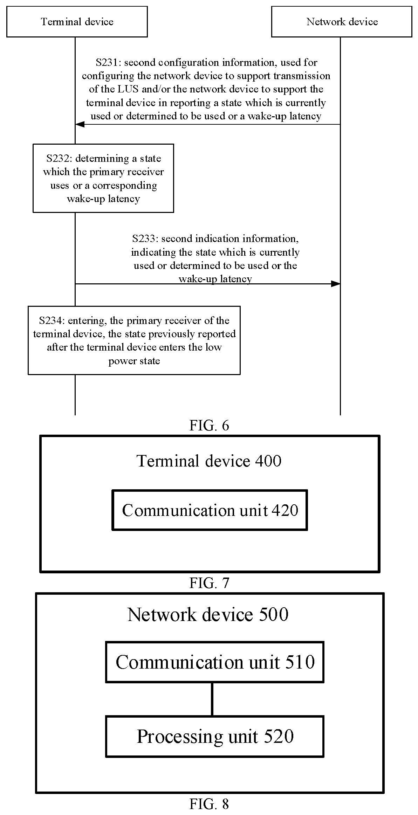

In conjunction with FIG. 6, the implementation process of the third embodiments is described. As shown in FIG. 6, the method includes the following processes.

In S232, a terminal device determines a state which the primary receiver uses or a wake-up latency corresponding to the state.

For example, the terminal device determines the used state which the primary receiver uses or the wake-up latency corresponding to the state based on its state and/or information of the to-be-transmitted service.

In S233, the terminal device transmits second indication information to the network device to indicate the state of the primary receiver that the terminal device determines to use.

In some embodiments, the second indication information is transmitted in the case that the network device supports transmission of the WUS and/or the network device supports the terminal device in reporting the information related to the state of the primary receiver that the terminal device determines to use.

For example, before S233, the method further includes S231. That is, the network device transmits the second configuration information to the terminal device. The second configuration information is used for configuring the network device to support transmission of the WUS and/or the network device to support the terminal device in reporting the information related to the state of the primary receiver which the terminal device determines to use or currently uses.

In S234, the primary receiver of the terminal device enters a state of the primary receiver previously reported by the network device after the terminal device enters the low power state.

Thus, in the third embodiments, the terminal device reports the state of the primary receiver which the terminal device determines to use or currently uses to the network device. Furthermore, in entering the low power state, the terminal device enters the reported state of the primary receiver, such that the terminal device and the network device have consistent understanding on the state of the primary receiver. As different states correspond to different wake-up latencies, the network device schedules downlink transmission after the wake-up latency corresponding to the state of the primary receiver to avoid resource waste caused by a failure of downlink receipt by the terminal device as the network device schedules the downlink transmission during the wake-up duration of the primary receiver.

It should be understood that in the embodiments of the present disclosure, the first embodiments, the second embodiments, and the third embodiments are separately implemented or are implemented in combination, which is not limited in the present disclosure.

For example, the terminal device first reports the first capability information to the network device, and the network device configures the state of the primary receiver based on the first capability information. Furthermore, the terminal device transmits the first indication information to the network device to indicate the state of the primary receiver expected by the terminal device, and the network device transmits the second signaling to the terminal device to reconfigure the state of the primary receiver of the terminal device.

For example, the terminal device first reports the first capability information to the network device, and the network device configures the state of the primary receiver based on the first capability information. Furthermore, the terminal device transmits the second indication information to the network device to indicate the state of the primary receiver which the terminal device determines to use or currently uses.

For example, the terminal device first reports the first indication information to the network device, and the network device configures or reconfigures the state of the primary receiver based on the first indication information. Furthermore, the terminal device transmits the second indication information to the network device to indicate the state of the primary receiver which the terminal device determines to use or currently uses.

Thus, in the embodiments of the present disclosure, the network device configures the state of the primary receiver to the terminal device, for example, the network device determines the state of the primary receiver configured to the terminal device based on the first capability information or the first indication information, or the terminal device reports the state of the primary receiver to the network device. Furthermore, in entering the low power state, the terminal device enters the state of the primary receiver configured by the network or the reported state of the primary receiver, such that the terminal device and the network device have consistent understanding on the state of the primary receiver. As different states correspond to different wake-up latencies, the network device schedules downlink transmission after the wake-up latency corresponding to the state of the primary receiver to avoid resource waste caused by a failure of downlink receipt by the terminal device as the network device schedules the downlink transmission during the wake-up duration of the primary receiver.

Method embodiments of the present disclosure are described in detail in conjunction with FIG. 3 to FIG. 6, and apparatus embodiments of the present disclosure are described in detail in conjunction with FIG. 7 to FIG. 11. It should be understood that the apparatus embodiments correspond to the method embodiments, and thus for similar description, reference may be made to the method embodiments.

FIG. 7 is a schematic block diagram of a terminal device 400 according to some embodiments of the present disclosure. As shown in FIG. 7, the terminal device 400 includes: a communication unit 410, configured to transmit first information to a network device, wherein the first information is related to a state of a primary receiver of the terminal device in the case that the terminal device enters a low power state.

In some embodiments, the first information includes first capability information, wherein the first capability information indicates information related to a state of the primary receiver supported by the terminal device in the case that the terminal device enters the low power state.

In some embodiments, the first information includes the first capability information, wherein the first capability information includes at least one of: one or more states of the primary receiver supported by the terminal device in the case that the terminal device enters the low power state; or one or more wake-up latencies supported by the terminal device in the case that the terminal device enters the low power state, wherein the one or more wake-up latencies correspond to the one or more states of the primary receiver supported by the terminal device.

In some embodiments, the state of the primary receiver supported by the terminal device includes at least one of: a first state, a second state, a third state, or a fourth state; wherein power consumption in the case that the primary receiver is in the first state, the second state, the third state, and the fourth state successively decreases; and/or a wake-up latency corresponding to the first state, a wake-up latency corresponding to the second state, a wake-up latency corresponding to the third state, and a wake-up latency corresponding to the fourth state successively increase.

In some embodiments, the first capability information is carried in terminal capability information and reported to the network device.

In some embodiments, the communication unit 410 is further configured to: receive first signaling from the network device, wherein the first signaling is used for configuring a target state of the primary receiver of the terminal device and/or a wake-up latency corresponding to the target state.

In some embodiments, the first signaling includes at least one of: RRC signaling, a MAC CE, or a PDCCH.

In some embodiments, the first signaling is further used for instructing the terminal device to enter the low power state.

In some embodiments, the terminal device further includes: a processing unit, configured to switch the primary receiver of the terminal device to be in the target state in the case that the terminal device enters the low power state.

In some embodiments, the first information includes first indication information, wherein the first indication information indicates information related to a state of the primary receiver expected by the terminal device in the case that the terminal device enters the low power state.

In some embodiments, the first indication information indicates at least one of: one or more states of the primary receiver expected by the terminal device in the case that the terminal device enters the low power state; or one or more wake-up latencies expected by the terminal device in the case that the terminal device enters the low power state, wherein the one or more wake-up latencies correspond to the one or more states of the primary receiver expected by the terminal device.

In some embodiments, the first indication information is transmitted over at least one of (RRC signaling, a MAC CE, or a PUCCH.

In some embodiments, the communication unit 410 is further configured to: transmit the first indication information to the network device in the case that a state of the primary receiver currently expected by the terminal device is different from a state of the primary receiver previously reported and expected by the terminal device, wherein the first indication information indicates the state of the primary receiver currently expected by the terminal device; and/or transmit the first indication information to the network device in the case that a state of the primary receiver currently expected by the terminal device is different from a state of the primary receiver configured by the network device to the terminal device, wherein the first indication information indicates the state of the primary receiver currently expected by the terminal device.

In some embodiments, the first indication information is transmitted upon receipt of first configuration information from the network device, wherein the first configuration information indicates that the network device supports transmission of a low power WUS and/or the network device supports the terminal device in reporting the information related to the state of the primary receiver expected by the terminal device.

In some embodiments, the first configuration information is transmitted over at least one of a system message, RRC signaling, a MAC CE, or a PDCCH.

In some embodiments, the communication unit 410 is further configured to receive second signaling from the network device, wherein the second signaling is used for configuring or reconfiguring a target state of the primary receiver of the terminal device and/or a wake-up latency corresponding to the target state.

In some embodiments, the first information includes second indication information, wherein the second indication information indicates information related to a state of the primary receiver which the terminal device determines to use or currently uses in the case that the terminal device enters the low power state.

In some embodiments, the second indication information indicates at least one of: the state of the primary receiver which the terminal device determines to use or currently uses in the case that the terminal device enters the low power state; or one or more wake-up latencies, wherein the one or more wake-up latencies correspond to one or more states of the primary receiver which the terminal device determines to use or currently uses.

In some embodiments, the second indication information is transmitted over at least one of RRC signaling, a MAC CE, or a PUCCH.

In some embodiments, the second indication information is transmitted upon receipt of second configuration information from the network device, wherein the second configuration information indicates that the network device supports transmission of a wake-up signal (WUS) and/or the network device supports the terminal device in reporting the information related to the state of the primary receiver which the terminal device determines to use or currently uses.

In some embodiments, the second configuration information is transmitted over at least one of a system message, RRC signaling, a MAC CE, or a PDCCH.

In some embodiments, the second indication information is transmitted in the case that the state of the primary receiver which the terminal device determines to use or currently uses is different from a state of the primary receiver previously reported by the terminal device to the network device.

In some embodiments, the state of the primary receiver which the terminal device determines to use or currently uses includes at least one of: a first state, a second state, a third state, or a fourth state; wherein power consumption in the case that the primary receiver is in the first state, the second state, the third state, and the fourth state successively decreases; and/or a wake-up latency corresponding to the first state, a wake-up latency corresponding to the second state, a wake-up latency corresponding to the third state, and a wake-up latency corresponding to the fourth state successively increase.

In some embodiments, the first state is a micro sleep state, the second state is a light sleep state, the third state is a deep sleep state, and the fourth state is OFF.

In some embodiments, the first information is transmitted upon receipt of third configuration information from the network device, wherein the third configuration information indicates that the network device supports transmission of a wake-up signal (WUS) and/or the network device supports the terminal device in reporting information related to the state of the primary receiver.

In some embodiments, the communication unit is a communication interface, a transceiver, an input and output interface of a communication chip or a system-on-chip. Above processing unit is one or more processors.

It should be understood that the terminal device 400 according to the embodiments of the present disclosure may correspond to the terminal device in the method embodiments of the present disclosure, and above and other operations and/or functions of various units of the terminal device 400 are intended to implement corresponding processes of the terminal device in the method 200 shown in FIGS. 3 to 6, which are not repeated herein for brevity.

FIG. 8 is a schematic block diagram of a network device 500 according to some embodiments of the present disclosure. As shown in FIG. 8, the network device 500 includes: a communication unit 510, configured to receive first information from a terminal device, wherein the first information is related to a state of a primary receiver of the terminal device in the case that the terminal device enters a low power state; and a processing unit 520, configured to determine, based on the first information, the state of the primary receiver of the terminal device in the case that the terminal device enters the low power state.

In some embodiments, the first information includes first capability information, wherein the first capability information indicates information related to a state of the primary receiver supported by the terminal device in the case that the terminal device enters the low power state.

In some embodiments, the first information includes the first capability information, wherein the first capability information includes at least one of: one or more states of the primary receiver supported by the terminal device in the case that the terminal device enters the low power state; or one or more wake-up latencies supported by the terminal device in the case that the terminal device enters the low power state, wherein the one or more wake-up latencies correspond to the one or more states of the primary receiver supported by the terminal device.

In some embodiments, the state of the primary receiver supported by the terminal device includes at least one of: a first state, a second state, a third state, or a fourth state; wherein power consumption in the case that the primary receiver is in the first state, the second state, the third state, and the fourth state successively decreases; and/or a wake-up latency corresponding to the first state, a wake-up latency corresponding to the second state, a wake-up latency corresponding to the third state, and a wake-up latency corresponding to the fourth state successively increase.

In some embodiments, the first capability information is carried in terminal capability information and reported to the network device.

In some embodiments, the communication unit 510 is further configured to: transmit first signaling to the terminal device, wherein the first signaling indicates a target state of the primary receiver of the terminal device and/or a wake-up latency corresponding to the target state.

In some embodiments, the first signaling includes at least one of: RRC signaling, a MAC CE, or a PDCCH.

In some embodiments, the first signaling is further used for instructing the terminal device to enter the low power state.

In some embodiments, the target state or the wake-up latency corresponding to the target state is determined based on the first capability information reported by the terminal device.

In some embodiments, the first information includes first indication information, wherein the first indication information indicates information related to a state of the primary receiver expected by the terminal device in the case that the terminal device enters the low power state.

In some embodiments, the first indication information indicates at least one of: one or more states of the primary receiver expected by the terminal device in the case that the terminal device enters the low power state; or one or more wake-up latencies expected by the terminal device in the case that the terminal device enters the low power state, wherein the one or more wake-up latencies correspond to the one or more states of the primary receiver expected by the terminal device.

In some embodiments, the first indication information is transmitted over at least one of RRC signaling, a MAC CE, or a PUCCH.

In some embodiments, the communication unit 510 is further configured to: transmit first configuration information to the network device, wherein the first configuration information indicates that the network device supports transmission of an LP WUS and/or the network device supports the terminal device in reporting the information related to the state of the primary receiver expected by the terminal device.

In some embodiments, the first configuration information is transmitted over at least one of a system message, RRC signaling, a MAC CE, or a PDCCH.

In some embodiments, the communication unit 510 is further configured to: transmit second signaling to the terminal device, wherein the second signaling is used for configuring or reconfiguring a target state of the primary receiver of the terminal device and/or a wake-up latency corresponding to the target state.

In some embodiments, the target state or the wake-up latency corresponding to the target state is determined based on the state of the primary receiver expected by the terminal device.

In some embodiments, the first information includes second indication information, wherein the second indication information indicates information related to a state of the primary receiver which the terminal device determines to use or currently uses in the case that the terminal device enters the low power state.

In some embodiments, the second indication information indicates at least one of: the state of the primary receiver which the terminal device determines to use or currently uses in the case that the terminal device enters the low power state; or one or more wake-up latencies, wherein the one or more wake-up latencies correspond to one or more states of the primary receiver which the terminal device determines to use or currently uses.

In some embodiments, the second indication information is transmitted over at least one of RRC signaling, a MAC CE, or a PUCCH.

In some embodiments, the communication unit 510 is further configured to: transmit second configuration information to the terminal device, wherein the second configuration information indicates that the network device supports transmission of a WUS and/or the network device supports the terminal device in reporting the information related to the state of the primary receiver which the terminal device determines to use or currently uses, and the first information is transmitted subsequent to the second configuration information.

In some embodiments, the second configuration information is transmitted over at least one of a system message, RRC signaling, a MAC CE, or a PDCCH.

In some embodiments, the second indication information is transmitted in the case that the state of the primary receiver which the terminal device determines to use or currently uses is different from a state of the primary receiver previously reported by the terminal device to the network device.

In some embodiments, the state of the primary receiver which the terminal device determines to use or currently uses includes at least one of: a first state, a second state, a third state, or a fourth state; wherein power consumption in the case that the primary receiver is in the first state, the second state, the third state, and the fourth state successively decreases; and/or a wake-up latency corresponding to the first state, a wake-up latency corresponding to the second state, a wake-up latency corresponding to the third state, and a wake-up latency corresponding to the fourth state successively increase.

In some embodiments, the first state is a micro sleep state, the second state is a light sleep state, the third state is a deep sleep state, and the fourth state is OFF.

In some embodiments, the communication unit 510 is further configured to transmit third configuration information to the terminal device, wherein the third configuration information indicates that the network device supports transmission of a WUS and/or the network device supports the terminal device in reporting information related to the state of the primary receiver, and the first information is transmitted subsequent to the third configuration information.

In some embodiments, the communication unit is a communication interface, a transceiver, an input and output interface of a communication chip or a system-on-chip. Above processing unit is one or more processors.

It should be understood that the network device 500 according to the embodiments of the present disclosure may correspond to the network device in the method embodiments of the present disclosure, and above and other operations and/or functions of various units of the network device 500 are intended to implement corresponding processes of the network device in the method 200 shown in FIGS. 3 to 6, which are not repeated herein for brevity.

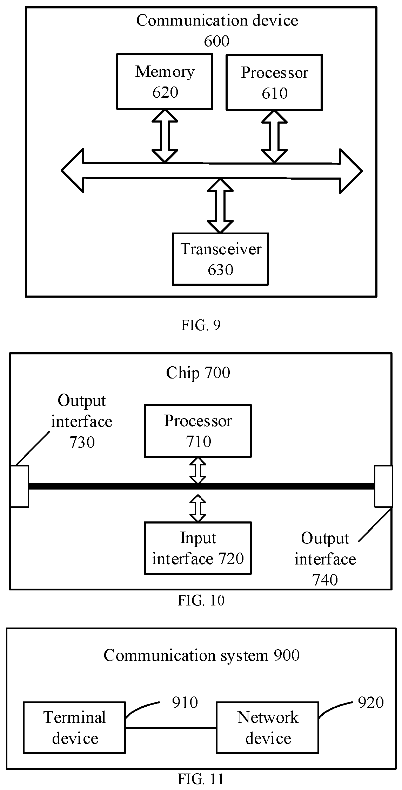

FIG. 9 is a schematic block diagram of a communication device 600 according to some embodiments of the present disclosure. The communication device 600 shown in FIG. 9 includes a processor 610. The processor 610 is configured to call and run one or more computer programs in a memory to perform the methods according to the embodiments of the present disclosure.

In some embodiments, as shown in FIG. 9, the communication device 600 further includes a memory 620. The processor 610 is configured to call and run one or more computer programs in the memory 620 to perform the methods according to the embodiments of the present disclosure.

The memory 620 is a device separate from the processor 610, or is integrated in the processor 610.

In some embodiments, as shown in FIG. 9, the communication device 600 further includes a transceiver 630. The processor 610 controls communication of the transceiver 630 with other devices. In particular, the transceiver 630 transmits information or data to other devices, or receives information or data from other devices.

The transceiver 630 includes a transiter and a receiver. The transceiver 630 further includes one or more antennas.

In some embodiments, the communication device 600 is the network device in the embodiments of the present disclosure, and performs the corresponding processes performed by the network device in the methods according to the embodiments of the present disclosure, which are not described herein again for brevity.

In some embodiments, the communication device 600 is the mobile terminal/terminal device according to the embodiments of the present disclosure, and performs the corresponding processes performed by the mobile terminal/terminal device in the methods according to the embodiment of the present disclosure, which are not described herein again for brevity.

FIG. 10 is a schematic block diagram of a chip according to some embodiments of the present disclosure. The chip 700 shown in FIG. 7 includes a processor 710. The processor 710 is configured to call and run one or more computer programs in a memory to perform the methods according to the embodiments of the present disclosure.

In some embodiments, as shown in FIG. 10, the chip 700 may further include a memory 720. The processor 710 is configured to call and run one or more computer programs in the memory 720 to perform the methods according to the embodiments of the present disclosure.

The memory 720 may be a device independent of the processor 710, or may be integrated in the processor 710.

In some embodiments, the chip 700 may further include an input interface 730. The processor 710 may control communication of the input interface 730 with other devices. In particular, the input interface 730 may acquire information or data from other devices.

In some embodiments, the chip 700 may further include an output interface 740. The processor 710 may control communication of the output interface 740 with other devices. In particular, the output interface 740 may transmit information or data to other devices.

In some embodiments, the chip 700 is applicable to the network device in the embodiments of the present disclosure, and may perform the corresponding processes practiced by the network device in the methods according to the embodiments of the present disclosure, which is not described herein again for brevity.

In some embodiments, the chip 700 is applicable to the mobile terminal/terminal device in the embodiments of the present disclosure, and may perform the corresponding processes practiced by the mobile terminal/terminal device in the methods according to the embodiment of the present disclosure, which is not described herein again for brevity.

It should be understood that the chip in the embodiments of the present disclosure may also referred to as a system-level chip, a system chip, a chip system, a system-on-chip, or the like.

FIG. 11 is a schematic block diagram of a communication system 900 according to some embodiments of the present disclosure. As shown in FIG. 11, the communication system 900 includes a terminal device 910 and a network device 920.

The terminal device 910 is configured to implement the corresponding functions implemented by the terminal device in the above methods, and the network device 920 is configured to implement the corresponding functions practiced by the network device in the above method, which are not described herein again for brevity.

It should be understood that the processor in the embodiments of the present disclosure is an integrated circuit chip with a signal processing capability. In the implementations, the processes in the method embodiments are achieved by integrated logic circuits of hardware in the processor or instructions in the software form. The processor is a general processor, a digital signal processor (DSP), an application-specific integrated circuit (ASIC), a field-programmable gate array (FPGA), any other programmable logic device, discrete gate, transistor logic device, or discrete hardware assembly that is capable of achieving or performing various methods, processes, and logic blocks according to the embodiments of the present disclosure. The general processor is a microprocessor, any conventional processor, or the like. The processes in the method according to the embodiments of the present disclosure may be directly embodied as being processed by a hardware decoding processor or being performed by a combination of hardware and software modules in the decoding processor. The software modules may be disposed in a random access memory, a flash memory, a read-only memory, a programmable read-only memory, an electrically erasable programmable memory, a register, and other storage medium mature in the field. The storage medium is disposed in the memory, and the processor reads the information in the memory and combines with its hardware to perform the processes of the above method.

It should be understood that the memory in embodiments of the present disclosure may be a volatile or non-volatile memory, or include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory is a random access memory (RAM) used as an external cache. By way of example but not limitation, many forms of RAMs are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memories.

It should be understood that the memory is exemplary but not for limitation. For example, the memory in the embodiments of the present disclosure may also be a SRAM, a DRAM, a SDRAM, a DDR SDRAM, an ESDRAM, a SLDRAM, a DR RAM, or the like. That is, the memory in the embodiments of the present disclosure is intend to include, but not limit to these and any other suitable type of memory.

Some embodiments of the present disclosure further provide a computer-readable storage medium for storing one or more computer programs.

In some embodiments, the computer-readable storage medium is applicable to the network device according to the embodiments of the present disclosure, and the one or more computer programs, when loaded and run on a computer, cause the computer to perform the corresponding processes implemented by the network device in the methods according to the embodiments of the present disclosure, which are not described herein again for brevity.

In some embodiments, the computer-readable storage medium is applicable to the mobile terminal/terminal device in the embodiments of the present disclosure, and the one or more computer programs, when loaded and run on a computer, cause the computer to perform the corresponding processes implemented by the mobile terminal/terminal device in the methods according to the embodiments of the present disclosure, which are not described herein again for brevity.

Some embodiments of the present disclosure further provide a computer program product including one or more computer program instructions.

In some embodiments, the computer program product is applicable to the network device in the embodiments of the present disclosure, and the one or more computer program instructions, when loaded and executed on a computer, cause the computer to perform the corresponding processes implemented by the network device in the methods according to the embodiments of the present disclosure, which are not described herein again for brevity.

In some embodiments, the computer program product is applicable to the mobile terminal/terminal device in the embodiments of the present disclosure, and the one or more computer program instructions, when loaded and executed on a computer, cause the computer to perform the corresponding processes implemented by the mobile terminal/terminal device in the methods according to the embodiments of the present disclosure, which are not described herein again for brevity.

Some embodiments of the present disclosure further provide a computer program.

In some embodiments, the computer program is applicable to the network device in the embodiments of the present disclosure, and the computer program, when loaded and run on a computer, causes the computer to perform the corresponding processes implemented by the network device in the methods according to the embodiment of the present disclosure, which are not described herein again for brevity.

In some embodiments, the computer program is applicable to the mobile terminal/terminal device in the embodiments of the present disclosure, and the computer program, when loaded and run on a computer, causes the computer to perform the corresponding processes implemented by the mobile terminal/terminal device in the methods according to the embodiments of the present disclosure, which are not described herein again for brevity.

It can be understood by those of ordinary skill in the art that the units and algorithmic processes of the examples described in conjunction with the embodiments disclosed herein can be practiced by the electronic hardware, or by a combination of the computer software and the electronic hardware. Whether these functions are achieved by the hardware or the software depends on the specific application and design constraints of the technical solution. For each application, those skilled in the art may use different methods to achieve the described functions, and such implementations should not be considered beyond the scope of the present disclosure.

It can be understood by those skilled in the art that for the specific operation processes of the system, device, and unit described above, reference may be made to the corresponding processes in the above embodiments of the method for convenience and simplicity of description, which are not repeated herein for convenience and brevity.

In the embodiments of the present disclosure, it should be understood that the systems, devices, and methods can be practiced in other ways. For example, the above apparatus embodiments are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts shown as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In the case that the functions are achieved in the form of software functional units and sold or used as standalone products, the functions may be stored in a computer-readable storage medium. Based on the understanding, the nature of the technical solutions of the present disclosure, the part contributed to the prior art, or the part of the technical solutions may be embodied in the form of a software product, and the software product is stored in a storage medium and includes a number of instructions to cause a computer device (which may be a personal computer, a server, a network equipment, or the like) to perform all or part of the processes of the method in various embodiments of the present disclosure. Above storage medium include: a U disk, a mobile hard disk, a ROM, a RAM, a disk, a disc, or other media that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

## Claims

1. A wireless communication method, applicable to a terminal device, the method comprising:
transmitting first information to a network device, wherein the first information is related to a state of a primary receiver of the terminal device in a case that the terminal device enters a low power state.

2. The method according to claim 1, wherein the first information comprises first capability information, wherein the first capability information indicates information related to a state of the primary receiver supported by the terminal device in the case that the terminal device enters the low power state.

3. The method according to claim 2, wherein the first information comprises the first capability information, wherein the first capability information comprises at least one of:
one or more states of the primary receiver supported by the terminal device in the case that the terminal device enters the low power state; or
one or more wake-up latencies supported by the terminal device in the case that the terminal device enters the low power state, wherein the one or more wake-up latencies correspond to the one or more states of the primary receiver supported by the terminal device.

4. The method according to claim 2 or 3, wherein the state of the primary receiver supported by the terminal device comprises at least one of a first state, a second state, a third state, or a fourth state; wherein
power consumption in a case that the primary receiver is in the first state, the second state, the third state, and the fourth state successively decreases; and/or
a wake-up latency corresponding to the first state, a wake-up latency corresponding to the second state, a wake-up latency corresponding to the third state, and a wake-up latency corresponding to the fourth state successively increase.

5. The method according to any one of claims 2 to 4, wherein the first capability information is carried in terminal capability information and reported to the network device.

6. The method according to any one of claims 1 to 5, further comprising:
receiving first signaling from the network device, wherein the first signaling is used for configuring a target state of the primary receiver of the terminal device and/or a wake-up latency corresponding to the target state.

7. The method according to claim 6, wherein the first signaling comprises at least one of radio resource control (RRC) signaling, a medium access control (MAC) control element (CE), or a physical downlink control channel (PDCCH).

8. The method according to claim 6 or 7, wherein the first signaling is further used for instructing the terminal device to enter the low power state.

9. The method according to any one of claims 6 to 8, further comprising:
entering, by the primary receiver of the terminal device, the target state in the case that the terminal device enters the low power state.

10. The method according to any one of claims 1 to 9, wherein the first information comprises first indication information, wherein the first indication information indicates information related to a state of the primary receiver expected by the terminal device in the case that the terminal device enters the low power state.

11. The method according to claim 10, wherein the first indication information indicates at least one of:
one or more states of the primary receiver expected by the terminal device in the case that the terminal device enters the low power state; or
one or more wake-up latencies expected by the terminal device in the case that the terminal device enters the low power state, wherein the one or more wake-up latencies correspond to the one or more states of the primary receiver expected by the terminal device.

12. The method according to claim 10 or 11, wherein the first indication information is transmitted over at least one of radio resource control (RRC) signaling, a medium access control (MAC) control element (CE), or a physical uplink control channel (PUCCH).

13. The method according to any one of claims 10 to 12, wherein transmitting the first information to the network device comprises:
transmitting the first indication information to the network device in a case that a state of the primary receiver currently expected by the terminal device is different from a state of the primary receiver previously reported and expected by the terminal device, wherein the first indication information indicates the state of the primary receiver currently expected by the terminal device; and/or
transmitting the first indication information to the network device in a case that a state of the primary receiver currently expected by the terminal device is different from a state of the primary receiver configured by the network device to the terminal device, wherein the first indication information indicates the state of the primary receiver currently expected by the terminal device.

14. The method according to any one of claims 10 to 13, wherein the first indication information is transmitted upon receipt of first configuration information from the network device, wherein the first configuration information indicates that the network device supports transmission of a low power wake-up signal (LP-WUS) and/or the network device supports the terminal device in reporting the information related to the state of the primary receiver expected by the terminal device.

15. The method according to claim 14, wherein the first configuration information is transmitted over at least one of a system message, radio resource control (RRC) signaling, a medium access control (MAC) control element (CE), or a physical downlink control channel (PDCCH).

16. The method according to any one of claims 10 to 15, further comprising:
receiving second signaling from the network device, wherein the second signaling is used for configuring or reconfiguring a target state of the primary receiver of the terminal device and/or a wake-up latency corresponding to the target state.

17. The method according to any one of claims 1 to 16, wherein the first information comprises second indication information, wherein the second indication information indicates information related to a state of the primary receiver which the terminal device determines to use or currently uses in the case that the terminal device enters the low power state.

18. The method according to claim 17, wherein the second indication information indicates at least one of:
the state of the primary receiver which the terminal device determines to use or currently uses in the case that the terminal device enters the low power state; or
one or more wake-up latencies, wherein the one or more wake-up latencies correspond to one or more states of the primary receiver which the terminal device determines to use or currently uses.

19. The method according to claim 17 or 18, wherein the second indication information is transmitted over at least one of radio resource control (RRC) signaling, a medium access control (MAC) control element (CE), or a physical uplink control channel (PUCCH).

20. The method according to any one of claims 17 to 19, wherein the second indication information is transmitted upon receipt of second configuration information from the network device, wherein the second configuration information indicates that the network device supports transmission of a wake-up signal (WUS) and/or the network device supports the terminal device in reporting the information related to the state of the primary receiver which the terminal device determines to use or currently uses.

21. The method according to claim 20, wherein the second configuration information is transmitted over at least one of a system message, radio resource control (RRC) signaling, a medium access control (MAC) control element (CE), or a physical downlink control channel (PDCCH).

22. The method according to any one of claims 17 to 21, wherein the second indication information is transmitted in a case that the state of the primary receiver which the terminal device determines to use or currently uses is different from a state of the primary receiver previously reported by the terminal device to the network device.

23. The method according to claim 18, wherein the state of the primary receiver which the terminal device determines to use or currently uses comprises at least one of a first state, a second state, a third state, or a fourth state, wherein
power consumption in a case that the primary receiver is in the first state, the second state, the third state, and the fourth state successively decreases; and/or
a wake-up latency corresponding to the first state, a wake-up latency corresponding to the second state, a wake-up latency corresponding to the third state, and a wake-up latency corresponding to the fourth state successively increase.

24. The method according to claim 4 or 23, wherein the first state is a micro sleep state, the second state is a light sleep state, the third state is a deep sleep state, and the fourth state is OFF.

25. The method according to any one of claims 1 to 24, wherein the first information is transmitted upon receipt of third configuration information from the network device, wherein the third configuration information indicates that the network device supports transmission of a wake-up signal (WUS) and/or the network device supports the terminal device in reporting information related to the state of the primary receiver.

26. A wireless communication method, applicable to a network device, the method comprising:
receiving first information from a terminal device, wherein the first information is related to a state of a primary receiver of the terminal device in a case that the terminal device enters a low power state; and
determining, based on the first information, the state of the primary receiver of the terminal device in the case that the terminal device enters the low power state.

27. The method according to claim 26, wherein the first information comprises first capability information, wherein the first capability information indicates information related to a state of the primary receiver supported by the terminal device in the case that the terminal device enters the low power state.

28. The method according to claim 27, wherein the first information comprises the first capability information, wherein the first capability information comprises at least one of:
one or more states of the primary receiver supported by the terminal device in the case that the terminal device enters the low power state; or
one or more wake-up latencies supported by the terminal device in the case that the terminal device enters the ow power state, wherein the one or more wake-up latencies correspond to the one or more states of the primary receiver supported by the terminal device.

29. The method according to claim 27 or 28, wherein the state of the primary receiver supported by the terminal device comprises at least one of a first state, a second state, a third state, or a fourth state, wherein
power consumption in a case that the primary receiver is in the first state, the second state, the third state, and the fourth state successively decreases; and/or
a wake-up latency corresponding to the first state, a wake-up latency corresponding to the second state, a wake-up latency corresponding to the third state, and a wake-up latency corresponding to the fourth state successively increase.

30. The method according to any one of claims 27 to 29, wherein the first capability information is carried in terminal capability information and reported to the network device.

31. The method according to any one of claims 26 to 30, further comprising:
transmitting first signaling to the terminal device, wherein the first signaling indicates a target state of the primary receiver of the terminal device and/or a wake-up latency corresponding to the target state.

32. The method according to claim 31, wherein the first signaling comprises at least one of radio resource control (RRC) signaling, a medium access control (MAC) control element (CE), or a physical downlink control channel (PDCCH).

33. The method according to claim 31 or 32, wherein the first signaling is further used for instructing the terminal device to enter the low power state.

34. The method according to any one of claims 31 to 33, wherein the target state or the wake-up latency corresponding to the target state is determined based on the first capability information reported by the terminal device.

35. The method according to any one of claims 26 to 34, wherein the first information comprises first indication information, wherein the first indication information indicates information related to a state of the primary receiver expected by the terminal device in the case that the terminal device enters the low power state.

36. The method according to claim 35, wherein the first indication information indicates at least one of:
one or more states of the primary receiver expected by the terminal device in the case that the terminal device enters the low power state; or
one or more wake-up latencies expected by the terminal device in the case that the terminal device enters the low power state, wherein the one or more wake-up latencies correspond to the one or more states of the primary receiver expected by the terminal device.

37. The method according to claim 35 or 36, wherein the first indication information is transmitted over at least one of radio resource control (RRC) signaling, a medium access control (MAC) control element (CE), or a physical uplink control channel (PUCCH).

38. The method according to any one of claims 35 to 37, wherein prior to receiving the first indication information from the terminal device, the method further comprises:
transmitting first configuration information to the network device, wherein the first configuration information indicates that the network device supports transmission of a low power wake-up signal (LP-WUS) and/or the network device supports the terminal device in reporting the information related to the state of the primary receiver expected by the terminal device.

39. The method according to claim 38, wherein the first configuration information is transmitted over at least one of a system message, radio resource control (RRC) signaling, a medium access control (MAC) control element (CE), or a physical downlink control channel (PDCCH).

40. The method according to any one of claims 35 to 39, further comprising:
transmitting second signaling to the terminal device, wherein the second signaling is used for configuring or reconfiguring a target state of the primary receiver of the terminal device and/or a wake-up latency corresponding to the target state.

41. The method according to claim 40, wherein the target state or the wake-up latency corresponding to the target state is determined based on the state of the primary receiver expected by the terminal device.

42. The method according to any one of claims 26 to 41, wherein the first information comprises second indication information, wherein the second indication information indicates information related to a state of the primary receiver which the terminal device determines to use or currently uses in the case that the terminal device enters the low power state.

43. The method according to claim 42, wherein the second indication information indicates at least one of:
the state of the primary receiver which the terminal device determines to use or currently uses in the case that the terminal device enters the low power state; or
one or more wake-up latencies, wherein the one or more wake-up latencies correspond to one or more states of the primary receiver which the terminal device determines to use or currently uses.

44. The method according to claim 42 or 43, wherein the second indication information is transmitted over at least one of radio resource control (RRC) signaling, a medium access control (MAC) control element (CE), or a physical uplink control channel (PUCCH).

45. The method according to any one of claims 42 to 44, further comprising:
transmitting second configuration information to the terminal device, wherein the second configuration information indicates that the network device supports transmission of a wake-up signal (WUS) and/or the network device supports the terminal device in reporting the information related to the state of the primary receiver which the terminal device determines to use or currently uses, and the first information is transmitted subsequent to the second configuration information.

46. The method according to claim 45, wherein the second configuration information is transmitted over at least one of a system message, radio resource control (RRC) signaling, a medium access control (MAC) control element (CE), or a physical downlink control channel (PDCCH).

47. The method according to any one of claims 42 to 46, wherein the second indication information is transmitted in a case that the state of the primary receiver which the terminal device determines to use or currently uses is different from a state of the primary receiver previously reported by the terminal device to the network device.

48. The method according to claim 43, wherein the state of the primary receiver which the terminal device determines to use or currently uses comprises at least one of a first state, a second state, a third state, or a fourth state, wherein
power consumption in a case that the primary receiver is in the first state, the second state, the third state, and the fourth state successively decreases; and/or
a wake-up latency corresponding to the first state, a wake-up latency corresponding to the second state, a wake-up latency corresponding to the third state, and a wake-up latency corresponding to the fourth state successively increase.

49. The method according to claim 29 or 48, wherein the first state is a micro sleep state, the second state is a light sleep state, the third state is a deep sleep state, and the fourth state is OFF.

50. The method according to any one of claims 26 to 49, further comprising:
transmitting third configuration information to the terminal device, wherein the third configuration information indicates that the network device supports transmission of a wake-up signal (WUS) and/or the network device supports the terminal device in reporting information related to the state of the primary receiver, and the first information is transmitted subsequent to the third configuration information.

51. A terminal device, comprising:
a communication unit, configured to transmit first information to a network device, wherein the first information is related to a state of a primary receiver of the terminal device in a case that the terminal device enters a low power state.

52. A network device, comprising:
a communication unit, configured to receive first information from a terminal device, wherein the first information is related to a state of a primary receiver of the terminal device in a case that the terminal device enters a low power state; and
a processing unit, configured to determine, based on the first information, the state of the primary receiver of the terminal device in the case that the terminal device enters the low power state.

53. A terminal device, comprising: a processor and a memory, wherein the memory is configured to store one or more computer programs, and the processor is configured to call and run the one or more computer programs in the memory to perform the method as defined in any one of claims 1 to 25.

54. A network device, comprising: a processor and a memory, wherein the memory is configured to store one or more computer programs, and the processor is configured to call and run the one or more computer programs in the memory to perform the method as defined in any one of claims 26 to 50.

55. A chip, comprising: a processor, wherein the processor is configured to call and run one or more computer programs in a memory to cause a device equipped with the chip to perform the method as defined in any one of claims 1 to 25 or the method as defined in any one of claims 26 to 50.

56. A computer-readable storage medium, storing one or more computer programs, wherein the one or more computer programs, when loaded and run on a computer, cause the computer to perform the method as defined in any one of claims 1 to 25 or the method as defined in any one of claims 26 to 50.

57. A computer program product, comprising: one or more computer program instructions, wherein the one or more computer program instructions, when loaded and executed on a computer, cause the computer to perform the method as defined in any one of claims 1 to 25 or the method as defined in any one of claims 26 to 50.

58. A computer program, wherein the computer program, when loaded and run on a computer, causes the computer to perform the method as defined in any one of claims 1 to 25 or the method as defined in any one of claims 26 to 50.
